# EUROPÄISCHE PATENTANMELDUNG

(11) **EP 2 157 323 A2**
(43) Veröffentlichungstag der Anmeldung: **24.02.2010**
(21) Anmeldenummer: 09166082.9
(22) Anmeldetag: 22.07.2009
(51) Int. Cl.: F16B 35/04, F16B 33/02

(54) **Schraube**

(30) Priorität: 22.08.2008 DE 102008041467
(71) Anmelder: HILTI Aktiengesellschaft, 9494 Schaan (LI)
(72) Erfinder: Rosenkranz, Falk, 9658, Wildhaus (CH); Basche, Holger, 6812, Meiningen (AT); Huber, Franz, 86865, Markt Wald (DE); Gstach, Peter, 9494, Schaan (LI)

(57) **Zusammenfassung**

Ein Befestigungselement (11) weist ein Drehangriffsmittel (12) für ein Setzwerkzeug und einen ein furchendes Gewinde (21) tragenden Schaft (16) auf, der ein dem Drehangriffsmittel (12) abgewandtes freies Ende (18) und einen Gewindekerndurchmesser aufweist. Das Gewinde (21) weist einen Gewindegang (22) mit einem Gewindeanfang (23) im Bereich (26) des freien Endes (18) des Schafts (16) auf, dessen Aussendurchmesser ausgehend vom freien Ende (18) auf einen maximalen Aussendurchmesser (A2) zunimmt und ausgehend von seinem maximalen Aussendurchmesser (A2) in Richtung des Drehangriffsmittels (12) auf einen kleineren Aussendurchmesser (A1) quasi-kontinuierlich abnimmt. Der Gewindekerndurchmesser des Schafts (16) nimmt ausgehend von einem Bereich (19) beim Drehangriffsmittel (12) in Richtung des freien Endes (18) des Schafts (12) auf einen kleineren Gewindekerndurchmesser (K1) des Schafts (16) quasi-kontinuierlich ab.

## Beschreibung

Die Erfindung betrifft ein Befestigungselement mit einem Drehangriffsmittel für ein Setzwerkzeug und mit einem ein furchendes Gewinde tragenden Schaft, der ein dem Drehangriffsmittel abgewandtes freies Ende und einen Gewindekerndurchmesser aufweist. Das Gewinde weist zumindest einen Gewindegang mit einem Gewindeanfang im Bereich des freien Endes des Schafts auf, dessen Aussendurchmesser ausgehend vom freien Ende auf einen maximalen Aussendurchmesser zunimmt und ausgehend von seinem maximalen Aussendurchmesser in Richtung des Drehangriffsmittels auf einen kleineren Aussendurchmesser quasi-kontinuierlich abnimmt.

Ein derartiges Befestigungselement, wie z. B. eine Betonschraube oder eine Innengewindehülse mit Aussengewinde, wird in einem zuvor in einem Bauteil oder Werkstück erstellten Bohrloch mit einem Setzwerkzeug, wie beispielsweise mit einem Tangentialschlagschrauber, z. B. eingeschraubt, wobei deren furchendes Gewinde zur Verankerung des Befestigungselementes dabei im Bauteil ein Gegengewinde beziehungsweise einen Hinterschnitt in die Bohrlochwandung furcht beziehungsweise schneidet.

In Bauteile oder Werkstücke aus einem mineralischen Material, wie Beton oder Mauerwerk, in denen ein gattungsgemässes Befestigungselement hauptsächlich gesetzt wird, sind spröde Materialien. Die Geometrie des Bohrlochs ist im Wesentlichen von der Qualität sowie der Geometrie des Bohrers abhängig. In der Praxis weisen die erstellten Bohrlöcher eine von einer optimalen Zylinderform abweichende Ausgestaltung auf, wobei sich die Bohrlöcher in Richtung des Bohrlochgrundes üblicherweise in ihrem Durchmesser verjüngen.

Um die Setzbarkeit eines gattungsgemässen Befestigungselementes in den Bohrlöchern zu gewährleisten, werden diese mit einem Bohrer erstellt, der einen grösseren Nenndurchmesser als der Gewindekerndurchmesser des Schafts des Befestigungselementes aufweist. Dabei darf der Nenndurchmesser des Bohrers im Verhältnis zum Gewindekerndurchmesser des Schafts des Befestigungselementes nicht zu gross gewählt werden, da ansonsten die übertragbaren Traglasten massgeblich sinken. Unter dem Gewindekerndurchmesser wird der Aussendurchmesser des Schafts im Bereich des Gewindes verstanden.

Aus der US 5,800,107 ist ein Befestigungselement mit einem Mehrkantkopf als Drehangriffsmittel für eine Schraubennuss oder einen Schraubenschlüssel als Setzwerkzeug und mit einem ein furchendes Gewinde tragenden Schaft bekannt, der ein dem Drehangriffsmittel abgewandtes freies Ende und einen Gewindekerndurchmesser aufweist. Das Gewinde weist zumindest einen Gewindegang mit einem Gewindeanfang im Bereich des freien Endes des Schafts auf, dessen Aussendurchmesser ausgehend vom freien Ende auf einen maximalen Aussendurchmesser zunimmt. Ausgehend von dem maximalen Aussendurchmesser nimmt der Aussendurchmesser des zumindest einen Gewindegangs in Richtung des Drehangriffsmittels kontinuierlich ab. Der Schaft weist am freien Ende einen Einführabschnitt auf, dessen Aussendurchmesser ausgehend vom freien Ende bis auf einen maximalen Kerndurchmesser des Schafts zunimmt. Der Gewindekerndurchmesser des Schafts nimmt ausgehend vom maximalen Gewindekerndurchmesser in Richtung des Drehangriffsmittels ebenfalls kontinuierlich ab.

Nachteilig an der bekannten Lösung ist, dass der Aussendurchmesser des zumindest einen Gewindegangs und der Gewindekerndurchmesser des Schafts jeweils in die gleiche Richtung kontinuierlich abnehmen, womit das bekannte Befestigungselement nicht an die üblicherweise vorhandenen Geometrien des Bohrlochs angepasst ist und daher eine einfache Setzbarkeit des Befestigungselementes je nach Bohrlochgeometrie nicht immer gegeben ist.

Aus der US 5,282,708 ist ein Befestigungselement mit einem Schraubenkopf als Drehangriffsmittel für einen Schraubenzieher als Setzwerkzeug und mit einem ein furchendes Gewinde tragenden Schaft bekannt, der ein dem Drehangriffsmittel abgewandtes freies Ende und einen bis auf einen Einführabschnitt am freien Ende des Schafts, konstanten Gewindekerndurchmesser aufweist. Das Gewinde weist zumindest einen Gewindegang mit einem Gewindeanfang im Bereich des freien Endes des Schafts auf, dessen Aussendurchmesser ausgehend vom freien Ende auf einen maximalen Aussendurchmesser zunimmt und ausgehend von dem maximalen Aussendurchmesser in Richtung des Drehangriffsmittels auf einen kleineren Aussendurchmesser kontinuierlich abnimmt.

Nachteilig an der bekannten Lösung ist, dass der Schaft nicht an die vorhandenen Geometrien des Bohrlochs angepasst ist und daher eine einfache Setzbarkeit des Befestigungselementes je nach Bohrlochgeometrie nicht gegeben ist.

Aufgabe der Erfindung ist es, ein Befestigungselement, insbesondere für mineralische Bauteile, zu schaffen, das im gesetzten Zustand hohe Traglasten sowie eine hohe Setzrobustheit aufweist.

Die Aufgabe ist durch die Merkmale des unabhängigen Anspruchs gelöst. Vorteilhafte Weiterbildungen sind in den Unteransprüchen dargelegt.

Gemäss der Erfindung nimmt der Gewindekerndurchmesser des Schafts ausgehend von einem Bereich beim Drehangriffsmittel in Richtung des freien Endes des Schafts auf einen kleineren Gewindekerndurchmesser des Schafts quasi-kontinuierlich ab.

Der Gewindekerndurchmesser des Schafts nimmt in Richtung des Drehangriffmittels zu, wobei der Aussendurchmesser des Gewindes in Richtung des Drehangriffmittels abnimmt. Damit ist eine gute Setzbarkeit des Befestigungselementes in den Bohrlöchern gegeben. Der grösste Traglastanteil wird durch den grösseren Hinterschnitt in einem Abstand zum Bohrlochmund in das Bauteil eingebracht, was eine gegenüber den bisher bekannten, gattungsgemässen Befestigungselementen vergleichsweise höhere Tragfähigkeit gewährleistet. Da der Schaft nahe des Bohrlochmundes einen grossen Gewindekerndurchmesser, der vorteilhaft nur wenig geringer als der Innendurchmesser des Bohrlochs in diesem Bereich ist, und somit einen entsprechend grossen Materialquerschnitt aufweist, sind im gesetzten Zustand des Befestigungselementes hohe Querkräfte, Normalkräfte, Biegemomente und Abdrehmomente übertragbar.

Unter Abdrehmoment wird in diesem Zusammenhang das Drehmoment verstanden, dass zu einem Torsionsversagen der Schraube führt. Aus Sicherheitsgründen sollte das Abdrehmoment deutlich grösser als das Drehmoment sein, welches zum Setzen des Befestigungselementes erforderlich ist.

Unter quasi-kontinuierlich abnehmend wird in diesem Zusammenhang eine im Wesentlichen kontinuierliche beziehungsweise stetig verlaufende Abnahme des Gewindekerndurchmesser des Schafts beziehungsweise des Aussendurchmessers des Gewindegangs verstanden. Die Abnahme des entsprechenden Durchmessers kann auch in vorteilhaft gleichmässigen, kleinen Stufen erfolgen, so dass die Abnahme auf die gesamte Erstreckung des Schaftes beziehungsweise des Gewindeganges wiederum als im wesentlichen kontinuierlich verlaufend angesehen werden kann.

Vorzugsweise nimmt der Gewindekerndurchmesser des Schafts linear ab, was ein vorteilhaftes Eindrehverhalten des Befestigungselementes in das Bauteil gewährleistet.

Bevorzugt weist der Schaft eine Längserstreckung auf und der Schaftabschnitt mit dem kontinuierlich abnehmenden Gewindekerndurchmesser erstreckt sich über mehr als 50% der Längserstreckung des Schafts, womit das Befestigungselement eine vorteilhafte Ausgestaltung zum Setzen in der Praxis üblicherweise vorhandenen Bohrlöchern aufweist.

Vorzugsweise erstreckt sich der Schaftabschnitt mit dem kontinuierlich abnehmenden Gewindekerndurchmesser ausgehend von dem Bereich beim Drehangriffsmittel bis zu einem Bereich des Schafts, an dem der zumindest eine Gewindegang seinen maximalen Aussendurchmesser aufweist. Der Schaft verjüngt sich somit kontinuierlich direkt von dem Drehangriffsmittel beziehungsweise in einem Abstand von diesem bis zu dem Einführabschnitt des Schafts, welcher seinerseits sich zum freien Ende hin verjüngt. Weist der Schaft keinen Einführabschnitt auf, so erstreckt sich der Schaftabschnitt mit dem kontinuierlich abnehmenden Gewindekerndurchmesser vorteilhaft bis zum freien Ende des Schafts.

Bevorzugt entspricht der Gewindekerndurchmesser des Schafts im Bereich des Drehangriffsmittels dem 1.01- bis 1.5-fachen, vorteilhaft dem 1.05- bis 1.2-fachen, des kleineren Gewindekerndurchmessers, was ein vorteilhaftes Eindrehverhalten des Befestigungselementes in das Bauteil gewährleistet.

Vorzugsweise nimmt der Aussendurchmesser des zumindest einen Gewindegangs linear ab, was ein vorteilhaftes Eindrehverhalten des Befestigungselementes in das Bauteil gewährleistet.

Bevorzugt entspricht der maximale Aussendurchmesser des zumindest einen Gewindegangs dem 1.01- bis 1.5-fachen, vorteilhaft dem 1.05- bis 1.2-fachen, des kleineren Aussendurchmessers des zumindest einen Gewindegangs, was ein vorteilhaftes Eindrehverhalten des Befestigungselementes in das Bauteil gewährleistet.

Vorzugsweise ist das Gewinde mit zumindest einem weiteren Gewindegang versehen, der einen konstanten Aussendurchmesser aufweist. Der zumindest eine weitere Gewindegang ist vorteilhaft zwischen dem Gewindegang mit dem kontinuierlich abnehmenden Aussendurchmesser vorgesehen und weist weiter vorteilhaft die gleiche Steigung wie dieser auf. Aufgrund des konstanten Aussendurchmessers des zumindest einen weiteren Gewindegang bildet dieser beim Setzvorgang eine Führung für das Befestigungselement. Eine besonders vorteilhafte Führung des Befestigungselementes wird gewährleistet, wenn der konstante Aussendurchmesser im Wesentlichen dem Nenndurchmesser des Bohrlochs entspricht, in welches das Befestigungselement gesetzt wird.

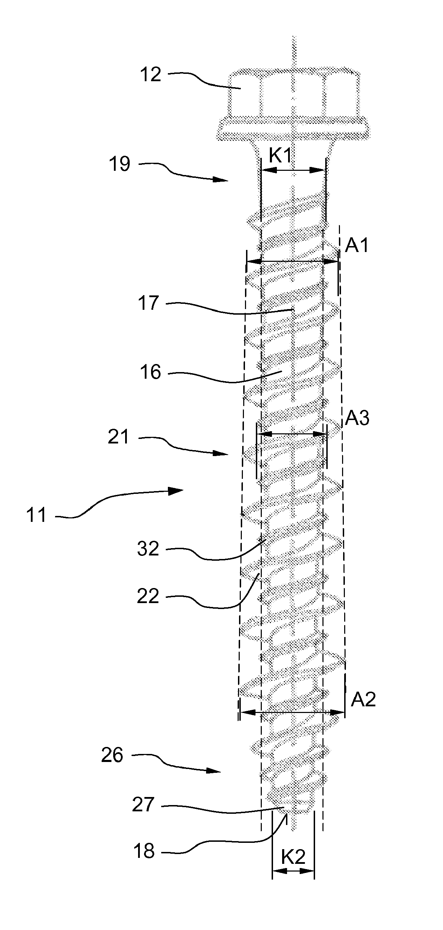

Die Erfindung wird nachstehend anhand eines Ausführungsbeispiels näher erläutert. Die einzige Figur zeigt ein erfindungsgemässes Befestigungselement in Seitenansicht.

Das in der Figur dargestellte Befestigungselement 11 weist einen Sechskantkopf als Drehangriffsmittel 12 für ein hier nicht dargestelltes Setzwerkzeug und einen ein furchendes Gewinde 21 tragenden Schaft 16 auf. Der Schaft 16 erstreckt sich entlang einer Längsachse 17 und weist ein dem Drehangriffsmittel 12 abgewandtes freies Ende 18 sowie einen Gewindekerndurchmesser auf.

Der Gewindekerndurchmesser des Schafts 16 nimmt ausgehend von einem Bereich 19 beim Drehangriffsmittel 12 in Richtung des freien Endes 18 des Schafts 16 auf einen kleineren Gewindekerndurchmesser K2 des Schafts 16 kontinuierlich und linear ab. Der Schaftabschnitt mit dem kontinuierlich abnehmenden Gewindekerndurchmesser erstreckt sich über mehr als 50% der Längserstreckung des Schafts 16. In diesem Beispiel erstreckt sich der Schaftabschnitt mit dem kontinuierlich abnehmenden Gewindekerndurchmesser bis zu einem Einführabschnitt 27 am freien Ende 18 des Schafts 16. Der Einführabschnitt 27 verjüngt sich in Richtung des freien Endes 18 und ermöglicht ein einfaches Einführen des Befestigungselementes 11 in ein hier nicht dargestelltes Bohrloch. Der Gewindekerndurchmesser K1 des Schafts 16 im Bereich 19 des Drehangriffsmittels 12 entspricht dem 1.01- bis 1.5-fachen, vorteilhaft dem 1.05- bis 1.2-fachen, des kleineren Gewindekerndurchmessers K2 im Bereich 26 des freien Endes 18 des Schafts 16.

Das Gewinde 21 weist einen Gewindegang 22 mit einem Gewindeanfang 23 im Bereich 26 des freien Endes 18 des Schafts 16 sowie einen weiteren, zwischen dem Gewindegang 22 angeordneten Gewindegang 32 auf. Der Aussendurchmesser des Gewindegangs 22 beim Gewindeanfang 23 nimmt ausgehend vom freien Ende 18 auf einen maximalen Aussendurchmesser A2 des Gewindegangs 22 zu. Der Aussendurchmesser des Gewindegangs 22 nimmt ausgehend von seinem maximalen Aussendurchmesser A2 in Richtung des Drehangriffsmittels 12 auf einen kleineren Aussendurchmesser A1 kontinuierlich und linear ab. Der maximale Aussendurchmesser A2 des Gewindegangs 22 entspricht dem 1.01- bis 1.5-fachen, vorteilhaft dem 1.05- bis 1.2-fachen, des kleineren Aussendurchmessers A1 des Gewindegangs 22. Der Aussendurchmesser A3 des weiteren Gewindegangs 32 ist mit Ausnahme von seinem Gewindeanfang und von seinem Gewindeende über die gesamte Erstreckung im Wesentlichen konstant, womit eine Führung des Befestigungselementes 11 beim Setzen in ein Bohrloch gegeben ist.

## Patentansprüche

1. Befestigungselement mit einem Drehangriffsmittel (12) für ein Setzwerkzeug und mit einem ein furchendes Gewinde (21) tragenden Schaft (16), der ein dem Drehangriffsmittel (12) abgewandtes freies Ende (18) und einen Gewindekerndurchmesser aufweist, wobei
das Gewinde (21) zumindest einen Gewindegang (22) mit einem Gewindeanfang (23) im Bereich (26) des freien Endes (18) des Schafts (16) aufweist, dessen Aussendurchmesser ausgehend vom freien Ende (18) auf einen maximalen Aussendurchmesser (A2) zunimmt und ausgehend von seinem maximalen Aussendurchmesser (A2) in Richtung des Drehangriffsmittels (12) auf einen kleineren Aussendurchmesser (A1) quasi-kontinuierlich abnimmt, **dadurch gekennzeichnet, dass**
der Gewindekerndurchmesser des Schafts (16) ausgehend von einem Bereich (19) beim Drehangriffsmittel (12) in Richtung des freien Endes (18) des Schafts (12) auf einen kleineren Gewindekerndurchmesser (K1) des Schafts (16) quasi-kontinuierlich abnimmt.

2. Befestigungselement nach Anspruch 1, **dadurch gekennzeichnet, dass** der Gewindekerndurchmesser des Schafts (16) linear abnimmt.

3. Befestigungselement nach Anspruch 1 oder 2, **dadurch gekennzeichnet, dass** der Schaft (16) eine Längserstreckung aufweist und der Schaftabschnitt mit dem kontinuierlich abnehmenden Gewindekerndurchmesser sich über mehr als 50% der Längserstreckung des Schafts (16) erstreckt.

4. Befestigungselement nach Anspruch 3, **dadurch gekennzeichnet, dass** der Schaftabschnitt mit dem kontinuierlich abnehmenden Gewindekerndurchmesser sich ausgehend von dem Bereich (19) beim Drehangriffsmittel (12) bis zu einem Bereich des Schafts (12) erstreckt, an dem der zumindest eine Gewindegang (22) seinen maximalen Aussendurchmesser (A2) aufweist.

5. Befestigungselement nach einem der Ansprüche 1 bis 4, **dadurch gekennzeichnet, dass** der Gewindekerndurchmesser (K1) des Schafts (16) im Bereich (19) des Drehangriffsmittels (12) dem 1.01- bis 1.5-fachen, vorteilhaft dem 1.05- bis 1.2-fachen, des kleineren Gewindekerndurchmessers (K2) entspricht.

6. Befestigungselement nach einem der Ansprüche 1 bis 5, **dadurch gekennzeichnet, dass** der Aussendurchmesser des zumindest einen Gewindegangs (22) linear abnimmt.

7. Befestigungselement nach einem der Ansprüche 1 bis 6, **dadurch gekennzeichnet, dass** der maximale Aussendurchmesser (A2) des zumindest einen Gewindegangs (22) dem 1.01- bis 1.5-fachen, vorteilhaft dem 1.05- bis 1.2-fachen, des kleineren Aussendurchmessers (A1) des zumindest einen Gewindegangs (22) entspricht.

8. Befestigungselement nach einem der Ansprüche 1 bis 7, **dadurch gekennzeichnet, dass** das Gewinde (21) mit zumindest einem weiteren Gewindegang (32) versehen ist, der einen konstanten Aussendurchmesser (A3) aufweist.
